# EUROPEAN PATENT APPLICATION

(11) **EP 4 753 282 A1**
(43) Date of publication of application: **03.06.2026**
(21) Application number: 24844378.0
(22) Date of filing: 29.05.2024
(51) Int. Cl.: H04Q 11/00

(54) **SLOT ALLOCATION METHOD AND APPARATUS FOR OPTICAL ACCESS NETWORK, AND SYSTEM, ELECTRONIC DEVICE AND STORAGE MEDIUM**

(30) Priority: 27.07.2023 CN 202310931553
(71) Applicant: Ruijie Networks Co., Ltd., Fuzhou, Fujian 350002 (CN)
(72) Inventor: YOU, Yongjie, Fuzhou, Fujian 350002 (CN); WANG, Longshun, Fuzhou, Fujian 350002 (CN)
(74) Representative: Boult Wade Tennant LLP
(86) International application number: PCT/CN2024/096065
(87) International publication number: WO 2025/020683

(57) **Abstract**

Embodiments of this application disclose a method and an apparatus for timeslot allocation in an optical access network. The method is applied to a central office device. The method includes: receiving a first bandwidth requirement value sent by a first user terminal device when it is determined that an allocated bandwidth is less than a bandwidth required for data transmission and that a difference between the allocated bandwidth and the bandwidth required for data transmission is greater than a specified threshold; obtaining an unoccupied timeslot in each sub-period included in a first timeslot allocation period; updating, based on the first bandwidth requirement value and the unoccupied timeslot, a transmission timeslot occupied by the first user terminal device in each sub-period; and sending the updated transmission timeslot to the first user terminal device.

## Description

### CROSS-REFERENCE TO RELATED APPLICATIONS

This application claims priority to Chinese Patent Application No. 202310931553.8, filed with the China National Intellectual Property Administration on July 27, 2023 and entitled "METHOD AND APPARATUS FOR TIMESLOT ALLOCATION IN OPTICAL ACCESS NETWORK", which is incorporated herein by reference in its entirety.

### TECHNICAL FIELD

This application relates to the field of communication technologies, and in particular, to a method, an apparatus, and a system for timeslot allocation in an optical access network, an electronic device, and a storage medium.

### BACKGROUND

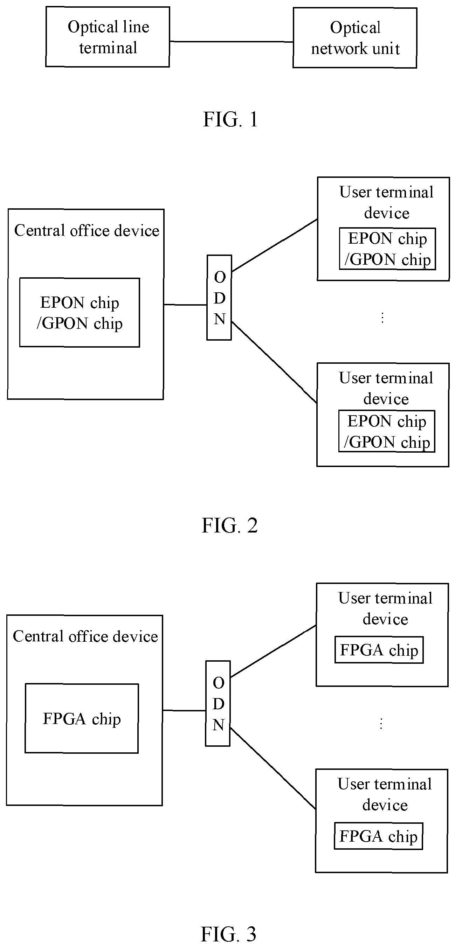

Against the backdrop of transition from copper to fiber optics, optical access networks have experienced rapid development. Currently, devices in conventional Ethernet all-optical networks use a one-to-one connection approach. For example, FIG. 1 is a schematic diagram of an architecture of a conventional Ethernet all-optical network. As shown in FIG. 1, an optical line terminal (Optical Line Terminal, OLT) deployed at a central office can be connected to only one optical network unit (Optical Network Unit, ONU) device, and cannot implement optical splitting. A conventional optical splitting solution needs to be implemented based on an Ethernet passive optical network (Ethernet Passive Optical Network, EPON) chip or a gigabit-capable passive optical network (Gigabit-Capable Passive Optical Network, GPON) chip. However, in a current optical splitting solution based on the EPON or GPON protocol, when an OLT allocates a timeslot to each ONU for data transmission, the OLT may determine a transmission timeslot of each ONU based on a collected bandwidth requirement and bandwidth configuration of each ONU, and transmission timeslots of all ONUs constitute a timeslot allocation period. In any timeslot allocation period, each ONU performs data transmission in the occupied timeslot. After the timeslot allocation period ends, the OLT may start to collect the bandwidth requirement of each ONU again and reallocate timeslots.

### SUMMARY

Exemplary embodiments of this application provide a method, an apparatus, and a system for timeslot allocation in an optical access network, an electronic device, and a storage medium.

According to a first aspect, an embodiment of this application provides a method for timeslot allocation in an optical access network. The method is applied to a central office device. The method includes:
receiving a first bandwidth requirement value from a first user terminal device, where the first bandwidth requirement value is sent by the first user terminal device when it is determined that an allocated bandwidth is less than a bandwidth required for data transmission and that a difference between the allocated bandwidth and the bandwidth required for data transmission is greater than a specified threshold, and the first bandwidth requirement value is used to represent a value of the bandwidth required for data transmission;
obtaining an unoccupied timeslot in each sub-period included in a first timeslot allocation period, where the first timeslot allocation period is a current timeslot allocation period for the user terminal device to transmit data, or the first timeslot allocation period is any one of a plurality of timeslot allocation periods with equal durations;
updating, based on the first bandwidth requirement value and the unoccupied timeslot, a transmission timeslot occupied by the first user terminal device in each sub-period; and
sending the updated transmission timeslot to the first user terminal device.

In some embodiments, the updating, based on the first bandwidth requirement value and the unoccupied timeslot, the transmission timeslot occupied by the first user terminal device in each sub-period includes:
obtaining a second bandwidth requirement value reported by the first user terminal device at a historical first time point, where the first time point is a time point before the first timeslot allocation period starts, the second bandwidth requirement value is used to determine a transmission timeslot occupied by the first user terminal device in each sub-period included in the first timeslot allocation period, the second bandwidth requirement value is less than the first bandwidth requirement value, and a difference between the first bandwidth requirement value and the second bandwidth requirement value is not less than the specified threshold;
allocating, based on the difference between the first bandwidth requirement value and the second bandwidth requirement value, an additional timeslot to the first user terminal device from the unoccupied timeslot included in each sub-period; and
updating, based on the additional timeslot, the transmission timeslot occupied by the first user terminal device in each sub-period.

Based on the foregoing solution, when the additional timeslot is allocated to the user terminal device, an additional bandwidth required by the user is determined based on the difference between the requirement value reported in the current period and the requirement value reported before the current period starts, and then the additional timeslot that needs to be allocated is determined based on the required additional bandwidth. Therefore, the additionally allocated timeslot can accurately match a current data transmission requirement of the user terminal, and a problem of bandwidth waste or failure to meet the requirement of the user terminal will not occur.

In some embodiments, the first time point is within any one of a plurality of transmission timeslots allocated to the first user terminal device in a second timeslot allocation period. The second timeslot allocation period is a timeslot allocation period previous to the first timeslot allocation period.

Based on the foregoing solution, the user terminal device may report its requirement in any transmission timeslot in the previous period, so that the central office device can allocate a transmission timeslot in the current period to the user terminal device based on the received requirement value.

In some embodiments, the first time point is within a last transmission timeslot included in the plurality of transmission timeslots.

Based on the foregoing solution, this application proposes setting the first user terminal device to report the bandwidth requirement in the last transmission timeslot occupied in the previous period. This can avoid a problem that the first user terminal device needs to report the bandwidth requirement again due to a change of an amount of data to be transmitted after the requirement is reported in a previous transmission timeslot.

In some embodiments, before the obtaining the second bandwidth requirement value, the method further includes:
receiving a third bandwidth requirement value reported by the first user terminal device before a second timeslot allocation period starts, where the second timeslot allocation period is a timeslot allocation period previous to the first timeslot allocation period, where the second bandwidth requirement value is less than the third bandwidth requirement value and a difference between the second bandwidth requirement value and the third bandwidth requirement value is greater than or equal to a preset value, or the second bandwidth requirement value is greater than the third bandwidth requirement value and a difference between the second bandwidth requirement value and the third bandwidth requirement value is less than the preset value; and
determining, based on the third bandwidth requirement value, a transmission timeslot occupied by the first user terminal device in each sub-period included in the second timeslot allocation period.

Based on the foregoing solution, this application proposes dynamically adjusting a time interval for the user terminal to report the bandwidth requirement value. If the bandwidth requirement value in the current period becomes smaller than that in the previous period and the change is not significant, bandwidth requirement reporting may be omitted, thereby reducing computing resources consumed by the central office device in computing and allocating transmission timeslots.

In some embodiments, the allocating, based on the difference between the first bandwidth requirement value and the second bandwidth requirement value, the additional timeslot to the first user terminal device from the unoccupied timeslot included in each sub-period includes:
determining, based on the difference between the first bandwidth requirement value and the second bandwidth requirement value, an additional bandwidth required by the first user terminal device;
determining, with reference to a number of sub-periods included in the first timeslot allocation period and the additional bandwidth, a part of the bandwidth borne by each sub-period; and
allocating, based on the part of the bandwidth borne by each sub-period and a bandwidth corresponding to each of the unoccupied timeslots, the additional timeslot to the first user terminal device from the unoccupied timeslots.

This application proposes that additional timeslots allocated to the first user terminal device should be evenly distributed in a plurality of sub-periods, so that the first user terminal device can cyclically transmit data for a plurality of times in the current timeslot allocation period. Based on this solution, even if the amount of data transmitted by the first user terminal device is large, the data may be evenly distributed in the plurality of sub-periods for transmission, without affecting data transmission of other user terminal devices.

In some embodiments, the obtaining the unoccupied timeslot in each sub-period included in the first timeslot allocation period includes:
obtaining stored arrangements of a plurality of timeslot allocation periods, where an arrangement of each timeslot allocation period includes a transmission timeslot allocated to each user terminal device in the timeslot allocation period;
deleting an expired arrangement from the plurality of arrangements, and determining that there are unoccupied timeslots in an arrangement of the first timeslot allocation period among remaining arrangements and that an interval between an end time point of the first timeslot allocation period and a time point of receiving the emergency bandwidth request is the shortest, where the expired arrangement is an arrangement that has been fully used; and
obtaining the unoccupied timeslot in each sub-period from the arrangement of the first timeslot allocation period.

Based on the foregoing solution, the central office device may store each computed arrangement, so that when the additional timeslot needs to be allocated to the first user terminal device, the central office device can directly obtain a stored non-expired arrangement and determine the additional timeslot that needs to be allocated, thereby improving efficiency of allocating the additional timeslot, so that the requirement of the first user terminal device can be met within a very short time.

In some embodiments, the interval between the end time point of the first timeslot allocation period and the time point of receiving the first bandwidth requirement value is the shortest.

In some embodiments, a duration of each timeslot allocation period is fixed.

In some embodiments, each sub-period includes a transmission timeslot allocated to each user terminal device.

In some embodiments, the transmission timeslot allocated to each user terminal device in each sub-period is determined in the following manner:
determining a start sending time point of each user terminal device based on a distance between each user terminal device and the central office device;
determining, based on a bandwidth requirement value of each user terminal device, a number of timeslots that each user terminal device needs to occupy; and
determining, based on the determined number of timeslots and the start sending time point, a specific timeslot occupied by each user terminal device in each sub-period.

In some embodiments, the determining the start sending time point of each user terminal device based on the distance between each user terminal device and the central office device includes:
determining a transmission order of each user terminal device based on the distance between each user terminal device and the central office device; and
determining the start sending time point of each user terminal device based on the transmission order and a compensation time.

In some embodiments, the compensation time is determined in the following manner:
determining a compensation time of the first user terminal device based on a difference between a time required for the first user terminal device to transmit data to the central office device and a time required for a second user terminal device to transmit data to the central office device, where the second user terminal device is a user terminal device previous to the first user terminal device in transmitting data.

According to a second aspect, an embodiment of this application provides another method for timeslot allocation in an optical access network. The method is applied to a first user terminal device. The method includes:
during data transmission in a first timeslot allocation period, when determining that an allocated bandwidth is less than a bandwidth required for data transmission and that a difference between the allocated bandwidth and the bandwidth required for data transmission is greater than a specified threshold, sending a first bandwidth requirement value to a central office device; and
receiving an updated transmission timeslot sent by the central office device, where the updated transmission timeslot is determined by the central office device based on the first bandwidth requirement value and an unoccupied timeslot in each sub-period included in the first timeslot allocation period.

In some embodiments, before the sending the first bandwidth requirement value, the method further includes:
before the first timeslot allocation period starts, reporting a second bandwidth requirement value to the central office device, where the second bandwidth requirement value is less than the first bandwidth requirement value, and a difference between the first bandwidth requirement value and the second bandwidth requirement value is not less than the preset value; and
receiving a transmission timeslot occupied by the first user terminal device in each sub-period included in the first timeslot allocation period, which is sent by the central office device.

In some embodiments, before the sending the second bandwidth requirement value to the central office device, the method further includes:
before a second timeslot allocation period starts, reporting a third bandwidth requirement value to the central office device, where the second timeslot allocation period is a timeslot allocation period previous to the first timeslot allocation period; and
determining that the second bandwidth requirement value is less than the third bandwidth requirement value and that a difference between the second bandwidth requirement value and the third bandwidth requirement value is greater than or equal to the preset value; or
determining that the second bandwidth requirement value is greater than the third bandwidth requirement value and that a difference between the second bandwidth requirement value and the third bandwidth requirement value is less than the preset value; and
the method further includes:
   receiving a transmission timeslot occupied by the first user terminal device in each sub-period included in the second timeslot allocation period, which is sent by the central office device, where the transmission timeslot is determined based on the third bandwidth requirement value.

According to a third aspect, an embodiment of this application provides an apparatus for timeslot allocation in an optical access network. The apparatus is a central office device, or the apparatus is applied to the central office device. The apparatus includes:
a communication unit, configured to receive a first bandwidth requirement value from a first user terminal device, where the first bandwidth requirement value is sent by the first user terminal device when it is determined that an allocated bandwidth is less than a bandwidth required for data transmission and that a difference between the allocated bandwidth and the bandwidth required for data transmission is greater than a specified threshold; and
a processing unit, configured to obtain an unoccupied timeslot in each sub-period included in the first timeslot allocation period, where
the processing unit is further configured to update, based on the first bandwidth requirement value and the unoccupied timeslot, a transmission timeslot occupied by the first user terminal device in each sub-period; and
the communication unit is further configured to send the updated transmission timeslot to the first user terminal device.

In some embodiments, the processing unit is specifically configured to:
obtain a second bandwidth requirement value reported by the first user terminal device at a historical first time point, where the first time point is a time point before the first timeslot allocation period starts, the second bandwidth requirement value is used to determine a transmission timeslot occupied by the first user terminal device in each sub-period included in the first timeslot allocation period, the second bandwidth requirement value is less than the first bandwidth requirement value, and a difference between the first bandwidth requirement value and the second bandwidth requirement value is not less than the preset value;
allocate, based on the difference between the first bandwidth requirement value and the second bandwidth requirement value, an additional timeslot to the first user terminal device from the unoccupied timeslot included in each sub-period; and
update, based on the additional timeslot, the transmission timeslot occupied by the first user terminal device in each sub-period.

In some embodiments, before obtaining the second bandwidth requirement value, the processing unit is further configured to:
receive, through the communication unit, a third bandwidth requirement value reported by the first user terminal device before a second timeslot allocation period starts, where the second timeslot allocation period is a timeslot allocation period previous to the first timeslot allocation period, where the second bandwidth requirement value is less than the third bandwidth requirement value and a difference between the second bandwidth requirement value and the third bandwidth requirement value is not less than a preset value, or the second bandwidth requirement value is greater than the third bandwidth requirement value and a difference between the second bandwidth requirement value and the third bandwidth requirement value is less than the preset value; and
determine, based on the third bandwidth requirement value, a transmission timeslot occupied by the first user terminal device in each sub-period included in the second timeslot allocation period.

In some embodiments, the processing unit is specifically configured to:
determine, based on the difference between the first bandwidth requirement value and the second bandwidth requirement value, an additional bandwidth required by the first user terminal device;
determine, with reference to a number of sub-periods included in the first timeslot allocation period and the additional bandwidth, a part of the bandwidth borne by each sub-period; and
allocate, based on the part of the bandwidth borne by each sub-period and a bandwidth corresponding to each of the unoccupied timeslots, the additional timeslot to the first user terminal device from the unoccupied timeslots.

In some embodiments, the processing unit is specifically configured to:
obtain stored arrangements of a plurality of timeslot allocation periods, where an arrangement of each timeslot allocation period includes a transmission timeslot allocated to each user terminal device in the timeslot allocation period;
delete an expired arrangement from the plurality of arrangements, and determine that there are unoccupied timeslots in an arrangement of the first timeslot allocation period among remaining arrangements and that an interval between an end time point of the first timeslot allocation period and a time point of receiving the emergency bandwidth request is the shortest, where the expired arrangement is an arrangement that has been fully used; and
obtain the unoccupied timeslot in each sub-period from the arrangement of the first timeslot allocation period.

According to a fourth aspect, an embodiment of this application provides another apparatus for timeslot allocation in an optical access network. The apparatus is a first user terminal device, or the apparatus is applied to the first user terminal device. The apparatus includes:
a processing unit, configured to instruct a communication unit to send a first bandwidth requirement value to a central office device when determining that an allocated bandwidth is less than a bandwidth required for data transmission and that a difference between the allocated bandwidth and the bandwidth required for data transmission is greater than a specified threshold during data transmission in a first timeslot allocation period; and
the communication unit, configured to receive an updated transmission timeslot sent by the central office device, where the updated transmission timeslot is determined by the central office device based on the first bandwidth requirement value and an unoccupied timeslot in each sub-period included in the first timeslot allocation period.

In some embodiments, before sending the first bandwidth requirement value, the communication unit is further configured to:
before the first timeslot allocation period starts, report a second bandwidth requirement value to the central office device, where the second bandwidth requirement value is less than the first bandwidth requirement value, and a difference between the first bandwidth requirement value and the second bandwidth requirement value is not less than the preset value; and
receive a transmission timeslot occupied by the first user terminal device in each sub-period included in the first timeslot allocation period, which is sent by the central office device.

In some embodiments, the processing unit is further configured to:
obtain a third bandwidth requirement value reported at a historical second time point, where the second time point is a time point before a second timeslot allocation period starts, and the second timeslot allocation period is a timeslot allocation period previous to the first timeslot allocation period; and
determine that the second bandwidth requirement value is less than the third bandwidth requirement value and that a difference between the second bandwidth requirement value and the third bandwidth requirement value is greater than the preset value; or
determine that the second bandwidth requirement value is greater than the third bandwidth requirement value and that a difference between the second bandwidth requirement value and the third bandwidth requirement value is less than the preset value.

According to a fifth aspect, an embodiment of this application provides a system for timeslot allocation in an optical access network. The system includes a central office device and a plurality of user terminal devices, where
a first user terminal device is configured to send a first bandwidth requirement value to the central office device when determining that an allocated bandwidth is less than a bandwidth required for data transmission and that a difference between the allocated bandwidth and the bandwidth required for data transmission is greater than a specified threshold during data transmission in a first timeslot allocation period, where the first user terminal device is any one of the plurality of user terminal devices;
the central office device is configured to receive the first bandwidth requirement value, and obtain an unoccupied timeslot in each sub-period included in the first timeslot allocation period; and update, based on the first bandwidth requirement value and the unoccupied timeslot, a transmission timeslot occupied by the first user terminal device in each sub-period, and send the updated transmission timeslot to the first user terminal device; and
the first user terminal device is further configured to receive the updated transmission timeslot sent by the central office device.

In some embodiments, before the first timeslot allocation period starts, the first user terminal device is further configured to report a second bandwidth requirement value to the central office device, where the second bandwidth requirement value is less than the first bandwidth requirement value, and a difference between the first bandwidth requirement value and the second bandwidth requirement value is not less than the preset value;
the central office device is further configured to determine, based on the second bandwidth requirement value, the transmission timeslot occupied by the first user terminal device in each sub-period included in the first timeslot allocation period, and send the determined transmission timeslot to the first user terminal device; and
the first user terminal device is further configured to receive the transmission timeslot occupied by the first user terminal device in each sub-period included in the first timeslot allocation period, which is sent by the central office device.

In some embodiments, when updating the transmission timeslot occupied by the first user terminal device in each sub-period, the central office device is specifically configured to:
allocate, based on the difference between the first bandwidth requirement value and the second bandwidth requirement value, an additional timeslot to the first user terminal device from the unoccupied timeslot included in each sub-period; and
update, based on the additional timeslot, the transmission timeslot occupied by the first user terminal device in each sub-period.

In some embodiments, when allocating, based on the difference between the first bandwidth requirement value and the second bandwidth requirement value, the additional timeslot to the first user terminal device from the unoccupied timeslot included in each sub-period, the central office device is specifically configured to:
determine, based on the difference between the first bandwidth requirement value and the second bandwidth requirement value, an additional bandwidth required by the first user terminal device;
determine, with reference to a number of sub-periods included in the first timeslot allocation period and the additional bandwidth, a part of the bandwidth borne by each sub-period; and
allocate, based on the part of the bandwidth borne by each sub-period and a bandwidth corresponding to each of the unoccupied timeslots, the additional timeslot to the first user terminal device from the unoccupied timeslots.

In some embodiments, the first user terminal device is further configured to report a third bandwidth requirement value to the central office device before a second timeslot allocation period starts, where the second timeslot allocation period is a timeslot allocation period previous to the first timeslot allocation period, where the second bandwidth requirement value is less than the third bandwidth requirement value and a difference between the second bandwidth requirement value and the third bandwidth requirement value is not less than the preset value, or the second bandwidth requirement value is greater than the third bandwidth requirement value and a difference between the second bandwidth requirement value and the third bandwidth requirement value is less than the preset value; and
the central office device is further configured to determine, based on the third bandwidth requirement value, a transmission timeslot occupied by the first user terminal device in each sub-period included in the second timeslot allocation period.

According to a sixth aspect, an embodiment of this application provides an electronic device. The electronic device includes a controller and a memory, where the memory is configured to store computer-executable instructions; and the controller is configured to execute the computer-executable instructions in the memory to use hardware resources in the controller to perform the operation steps of the method in any possible implementation of the first aspect or the second aspect.

According to a seventh aspect, an embodiment of this application provides a computer-readable storage medium. The computer-readable storage medium stores instructions, and when the instructions are run by a computer, the computer is enabled to perform the method in each of the foregoing aspects.

According to an eighth aspect, an embodiment of this application further provides an apparatus for timeslot allocation in an optical access network. The apparatus is a central office device, or the apparatus is applied to the central office device. The apparatus includes:
a communication unit, configured to receive a first bandwidth requirement value from a first user terminal device, where the first bandwidth requirement value is sent by the first user terminal device when it is determined that an allocated bandwidth is less than a bandwidth required for data transmission and that a difference between the allocated bandwidth and the bandwidth required for data transmission is greater than a specified threshold, and the first bandwidth requirement value is used to represent a value of the bandwidth required for data transmission; and
a processing unit, configured to obtain an unoccupied timeslot in each sub-period included in the first timeslot allocation period, where the first timeslot allocation period is a current timeslot allocation period for the user terminal device to transmit data; and further configured to update, based on the first bandwidth requirement value and the unoccupied timeslot, a transmission timeslot occupied by the first user terminal device in each sub-period, where
the communication unit is configured to send the updated transmission timeslot to the first user terminal device.

Based on the foregoing solution, this application proposes that before a timeslot allocation period ends, if an amount of data transmitted by a user terminal device increases, an additional timeslot should be requested from the central office device. The central office device may determine, based on the request of the user terminal device, the additional timeslot to be allocated to the user terminal device from unallocated timeslots in the current timeslot allocation period, so that a transmission requirement of the user terminal device can be met in the current timeslot allocation period. Compared with a conventional solution in which a user terminal device needs to wait for a next timeslot allocation period to request more timeslots, the solution of this application can enable the transmission requirement of the user terminal device to be met in a timely manner, thereby reducing occurrence of buffer overflow of the user terminal device.

### BRIEF DESCRIPTION OF DRAWINGS

The accompanying drawings described herein are intended for better understanding of this application, and constitute a part of this application. Exemplary embodiments and descriptions thereof in this application are intended to interpret this application and do not constitute any improper limitation on this application.
FIG. 1 is a schematic diagram of an architecture of a conventional Ethernet all-optical network.
FIG. 2 is a schematic diagram of an architecture of an optical splitting system based on an EPON chip.
FIG. 3 is a schematic diagram of an architecture of an optical splitting system implemented based on an FPGA.
FIG. 4 is a schematic diagram of an architecture of an optical splitting system according to an embodiment of this application.
FIG. 5 is a flowchart of a periodic timeslot allocation method according to an embodiment of this application.
FIG. 6 is a schematic diagram of a timeslot allocation period according to an embodiment of this application.
FIG. 7 is a schematic diagram of a sub-period according to an embodiment of this application.
FIG. 8 is a schematic diagram of a scenario of data transmission according to an embodiment of this application.
FIG. 9 is a schematic diagram of a process of data transmission according to an embodiment of this application.
FIG. 10 is a schematic diagram of time consumption for data transmission by a user terminal device according to an embodiment of this application.
FIG. 11 is a schematic diagram of another process of data transmission by a user terminal device according to an embodiment of this application.
FIG. 12 is a flowchart of a method for timeslot allocation in an optical access network according to an embodiment of this application.
FIG. 13 is a schematic diagram of an updated sub-period according to an embodiment of this application.
FIG. 14 is a schematic diagram of a structure of an apparatus for timeslot allocation in an optical access network according to an embodiment of this application.
FIG. 15 is a schematic diagram of a structure of an electronic device according to an embodiment of this application.

### DESCRIPTION OF EMBODIMENTS

To make the objectives, technical solutions, and advantages of the embodiments of this application clearer, the following clearly and thoroughly describes the technical solutions of this application with reference to the accompanying drawings in the embodiments of this application. Apparently, the described embodiments are some but not all of the embodiments of the technical solutions of this application. All other embodiments obtained by a person of ordinary skill in the art based on the embodiments described in this application document without creative efforts shall fall within the protection scope of the technical solutions of this application.

In the specification, claims, and the accompanying drawings of the present invention, the terms "first", "second", and the like are intended to distinguish between similar objects but do not necessarily indicate a specific order or sequence. It should be understood that the numbers used in such a way are interchangeable in proper circumstances so that embodiments of the present invention described herein can be implemented in other orders than the order illustrated or described herein.

A conventional Ethernet all-optical network cannot implement optical splitting. A central office device (which may also be referred to as an OLT device) is in a one-to-one relationship with a user terminal device (which may also be referred to as an ONU device). Currently, there are two conventional optical splitting solutions on the market. One is an optical splitting solution implemented based on an EPON or a GPON, and the other is to program a field-programmable gate array (Field-Programmable Gate Array, FPGA) chip so that the FPGA chip can implement the EPON or GPON protocol. The following describes the two conventional optical splitting solutions with reference to the accompanying drawings.

FIG. 2 is a schematic diagram of an architecture of an optical splitting system based on an EPON/GPON chip. As shown in FIG. 2, in the optical splitting system, one central office device can be connected to a plurality of user terminal devices through an optical distribution network (Optical Distribution Network, ODN), and the central office allocates bandwidths to the plurality of user terminal devices in dynamic bandwidth allocation (Dynamic Bandwidth Allocation, DBA) mode. In DBA mode, bandwidth allocation is periodic. In each period, the central office device may allocate a transmission timeslot to each user terminal device based on a bandwidth requirement reported by the user terminal device and a bandwidth configuration of each timeslot until bandwidth requirements of all user terminal devices are met. In an actual allocation process, the central office device divides one period into a plurality of timeslots, where each timeslot corresponds to a fixed bandwidth value, and then the central office device allocates a transmission timeslot to each user terminal based on a bandwidth requirement of each user terminal. For example, when reporting a bandwidth requirement, user terminal A may determine a required bandwidth value based on an amount of data that it needs to transmit. For example, when user terminal A determines that 100-bit data is generated per second during running, user terminal A may request a bandwidth of 100 bit/second (bit/s) from the central office to transmit the data generated by user terminal A. Further, when the bandwidth requirement reported by user terminal A and received by the central office device is 100 bit/s, the central office device may obtain a bandwidth corresponding to each timeslot configured by the central office device. For example, if the bandwidth of each timeslot is 10 bit/s, the central office device may allocate 10 timeslots to user terminal A for data transmission. This method can be used to allocate different transmission timeslots to user terminal devices, to ensure that each user terminal device can transmit data in its own timeslot without collision.

However, because the central office device allocates transmission timeslots to the user terminal devices based on bandwidth requirements reported by the user terminal devices, when an amount of data that needs to be transmitted by a user terminal device is large, the number of timeslots allocated by the central office device to the user terminal device may also increase, resulting in an extended timeslot allocation period, and causing long data transmission delays to other user terminal devices. Due to the long transmission delays, traffic of the other user terminal devices may exceed buffer capacities of the user terminal devices in the extended timeslot allocation period, and buffer overflow problems may occur on the user terminal devices. In addition, due to the extended timeslot allocation period, bandwidth requirements of some user terminal devices with a sharp increase in data to be transmitted cannot be met, and buffer overflow problems on the user terminal devices are exacerbated. It can be learned that when an ONU transmits a large amount of data and occupies more timeslots, the timeslot allocation period may become longer, causing long data transmission delays to other ONU devices. Due to the long transmission delays, traffic of the other user terminal devices may exceed buffer capacities of the user terminal devices in the extended timeslot allocation period, and buffer overflow problems may occur on the user terminal devices.

Moreover, in a scenario in which a new user terminal device goes online, an excessively long timeslot allocation period may also cause difficulty for the new user terminal device to go online. It is known that in the EPON/GPON-based optical splitting solution, the central office device may broadcast a gate message at an end time point of each timeslot allocation period. After receiving the gate message, the new user terminal device may send its own media access control (Media Access Control, MAC) address and other information to the central office device. The central office device may register the new user terminal device based on the received information, thereby completing the process of bringing the new user terminal device online. However, if the timeslot allocation period is excessively long, the central office device may be unable to broadcast the gate message in time, and unable to discover in time the new user terminal device waiting to go online, causing difficulty for the new user terminal device to go online.

In addition, the EPON uses an 8-byte/10-byte (8B/10B) encoding standard, which means that data is encoded in units of 8 bits to obtain 10-bit data. After being encoded, the original 8-bit data becomes 10-bit data. Therefore, 20% of the bandwidth needs to be used for a fixed encoding overhead in the data encoding process, resulting in a bandwidth loss.

FIG. 3 is a schematic diagram of an architecture of an optical splitting system implemented based on an FPGA. This solution is implemented by a hardware support layer of the FPGA and an embedded processor in the chip. It requires a physical layer network card chip to support an optical splitting protocol and belongs to a MAC layer technology. In this solution, bandwidth allocation is also performed periodically, but unlike the periodic reservation-based bandwidth allocation solution implemented by the foregoing EPON chip, the FPGA chip may collect statistics of upstream traffic in a previous period and use a proportional weighting algorithm and a bandwidth utilization adjustment algorithm for bandwidth allocation in a next period. Although drawbacks of the non-fixed-period bandwidth allocation solution based on the EPON chip can be avoided in this solution, there is a lag in the statistics of traffic collected from the previous period and the traffic in the previous period is affected by a previous bandwidth allocation policy. Therefore, the traffic in the previous period cannot truly reflect an upstream traffic requirement of a device. Therefore, a bandwidth allocation policy for the next period, determined based on the traffic in the previous period, is not accurate.

In summary, it can be learned that the conventional optical splitting solution still has great drawbacks in allocating bandwidths to user terminal devices. If the EPON chip, the GPON chip, or the FPGA chip is configured to implement the optical splitting solution, optical splitting costs are high. Therefore, an optical splitting solution suitable for a conventional Ethernet chip is urgently needed.

An embodiment of this application provides a solution to timeslot allocation in an optical access network, to allocate transmission timeslots to a plurality of user terminal devices respectively in time division multiplexing mode. The solution provided in this application is applied to a conventional Ethernet chip using light as a transmission medium, to implement stable and efficient data transmission of each user terminal device through Ethernet layer 2 protocol packet control. In the solution of this application, before a timeslot allocation period ends, if an amount of data transmitted by a user terminal device increases, an additional timeslot may be requested from a central office device. The central office device may determine, based on the request of the user terminal device, the additional timeslot to be allocated to the user terminal device from unallocated timeslots in the current timeslot allocation period, so that a transmission requirement of the user terminal device can be met in the current timeslot allocation period. Compared with a conventional solution in which a user terminal device needs to wait for a next timeslot allocation period to request more timeslots, the solution of this application can enable the transmission requirement of the user terminal device to be met in a timely manner, thereby reducing occurrence of buffer overflow of the user terminal device.

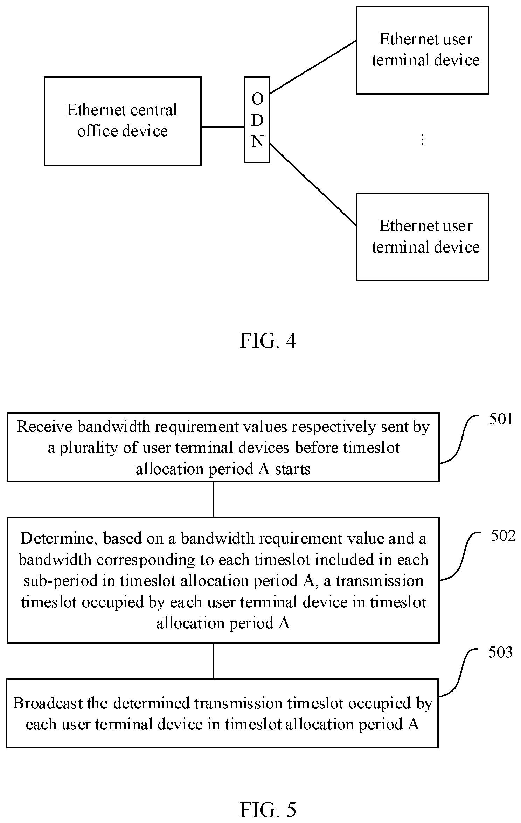

To facilitate understanding of the timeslot allocation solution provided in this application, the following first describes an optical splitting system to which the solution of this application is applicable. FIG. 4 is a schematic diagram of an architecture of an optical splitting system according to an embodiment of this application. As shown in FIG. 4, the optical splitting system to which this embodiment of this application is applicable includes an Ethernet central office device, a plurality of Ethernet user terminal devices, and an ODN. The Ethernet central office device is connected to the plurality of Ethernet user terminal devices through the ODN. The ODN mainly includes three parts: a light source, optical fibers, and an optical signal receiver. The light source may be a laser, configured to generate optical signals. The optical signals are transmitted through the optical fibers to the Ethernet central office device or the plurality of Ethernet user terminal devices. The optical signal receiver is configured to receive an optical signal from the Ethernet central office device or an Ethernet user terminal device. The Ethernet central office device is configured to connect to a fiber backbone and serve as an Ethernet ingress and an intranet ingress/egress. The Ethernet central office device is configured to perform functions such as traffic scheduling and bandwidth allocation. In short, the Ethernet central office device is configured to complete external Ethernet access and send obtained data to the plurality of downstream Ethernet user terminal devices through the ODN. The Ethernet user terminal devices are configured to receive the data from the Ethernet central office device and return corresponding responses.

It should be noted that the optical splitting system shown in FIG. 4 is only an example. The number of Ethernet user terminal devices included in the optical splitting system is not limited in this embodiment of this application. For ease of description, subsequently, the Ethernet central office device included in FIG. 4 is referred to as the central office device, and the Ethernet user terminal is referred to as the user terminal device.

The following describes in detail the solution of this application with reference to the optical splitting system shown in FIG. 4. To facilitate understanding of the solution provided in this embodiment of this application in which a transmission timeslot occupied by a user terminal device in a current timeslot allocation period is updated based on a bandwidth requirement reported by the user terminal device before the timeslot allocation period ends, a periodic timeslot allocation solution is first described. FIG. 5 is a flowchart of a periodic timeslot allocation method according to an embodiment of this application. For example, a procedure of the method shown in FIG. 5 may be performed by the central office device included in the optical splitting system shown in FIG. 4, or may be performed by specific components such as a processor or an Ethernet chip included in the central office device. This is not limited in this embodiment of this application. The procedure of the method shown in FIG. 5 specifically includes the following steps.

501. Receive bandwidth requirement values respectively sent by a plurality of user terminal devices before timeslot allocation period A starts.

The central office device is connected to the plurality of user terminal devices through the ODN. Timeslot allocation period A is any one of a plurality of timeslot allocation periods that are set on the central office device, and durations of the timeslot allocation periods are equal.

Optionally, the plurality of user terminal devices connected to the central office device may report their bandwidth requirement values before each timeslot allocation period starts. For example, each user terminal device may report its bandwidth requirement value to the central office in a transmission timeslot occupied in a timeslot allocation period previous to timeslot allocation period A. Herein, the timeslot allocation period previous to timeslot allocation period A is defined as timeslot allocation period B. In timeslot allocation period B, a first user terminal device is allocated three timeslots for data transmission, which are timeslot 1, timeslot 2, and timeslot 3. In an optional manner, the first user terminal device may report its bandwidth requirement value in any one of the three timeslots, so that the central office can allocate a transmission timeslot in timeslot allocation period A to the first user terminal device. In another optional manner, the first user terminal device may report its bandwidth requirement value in the last one of the three timeslots: timeslot 1, timeslot 2, and timeslot 3. This avoids a problem that the first user terminal device needs to report the bandwidth requirement value again due to a change of an amount of data to be transmitted after the requirement value is reported in a previous transmission timeslot.

502. Determine, based on the bandwidth requirement value and a bandwidth corresponding to each timeslot included in each sub-period in timeslot allocation period A, a transmission timeslot occupied by each user terminal device in timeslot allocation period A.

A sub-period occupied by each user terminal device in timeslot allocation period A, that is, a transmission timeslot occupied by each user terminal device in each sub-period included in timeslot allocation period A, is determined, where each sub-period includes the transmission timeslot allocated to each user terminal device. It should be noted that the number of sub-periods included in each timeslot allocation period is not limited in this embodiment of this application.

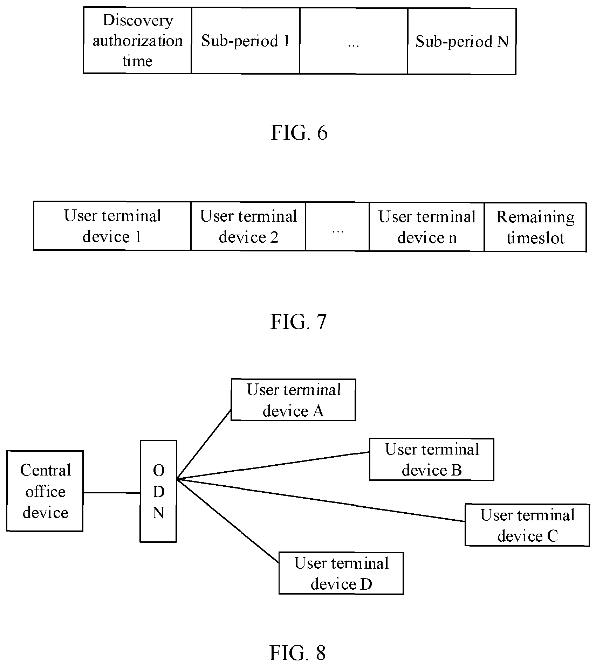

As an example, FIG. 6 is a schematic diagram of a timeslot allocation period according to an embodiment of this application. The timeslot allocation period includes a discovery authorization time and N sub-periods, where the discovery authorization time is used for the central office device to register a newly online user terminal device. Further, FIG. 7 is a schematic diagram of a sub-period according to an embodiment of this application. The sub-period includes a transmission timeslot allocated by the central office device to each user terminal device and a remaining timeslot after allocation. Therefore, for any user terminal device, data can be transmitted cyclically for N times in a timeslot allocation period, and data transmission of other user terminal devices will not be affected, while data congestion is avoided.

For example, a process of periodically allocating a transmission timeslot to the first user terminal device by the central office device is described by using the first user terminal device among the plurality of user terminal devices as an example. The central office device may determine, based on a bandwidth requirement of the first user terminal device and the number of sub-periods included in the timeslot allocation period of the timeslots to be allocated, a part of the bandwidth that needs to be borne by each sub-period. For example, if the bandwidth requirement of the first user terminal device is 100 bit/s, and the timeslot allocation period of the timeslots to be allocated includes 10 sub-periods, each sub-period bears a bandwidth requirement of 10 bit/s. Further, the central office device may determine, based on the bandwidth corresponding to the timeslot included in each sub-period and the part of the bandwidth borne by each sub-period, a transmission timeslot occupied by the first user terminal device in each sub-period. For example, using a first sub-period included in the timeslot allocation period as an example, the first sub-period includes 10 timeslots from timeslot A to timeslot J, a bandwidth of each timeslot is 10 bit/s, and a part of the bandwidth borne by the first sub-period is 10 bit/s. In this case, the central office device may allocate a timeslot from timeslots A-J to the first user terminal device as the transmission timeslot of the first user terminal, and the transmission timeslot is used for the first user terminal device to transmit data. Similarly, a transmission timeslot occupied by the first user terminal device in each sub-period in other sub-periods may also be determined according to the foregoing method, and transmission timeslots occupied by the first user terminal device in a plurality of sub-periods can meet a data transmission requirement of the first user terminal device.

503. Broadcast the determined transmission timeslot occupied by each user terminal device in timeslot allocation period A.

Compared with a conventional EPON/GPON-based optical splitting solution in which a timeslot allocation period is adjusted based on a bandwidth requirement of a user terminal device, this application sets a timeslot allocation period with a fixed duration as the timeslot allocation period, to avoid a problem that an excessively long timeslot allocation period caused by a high bandwidth requirement of a user terminal device brings about long data transmission delays, device buffer overflow, and the like for other user terminal devices, and also avoid a problem that the excessively long timeslot allocation period causes difficulty for a new user terminal device to go online. In addition, in the solution of this application, the timeslot allocation period is further set to include a plurality of sub-periods, and a timeslot is allocated to each user terminal device in a sub-period, so that a data transmission delay of each user terminal device is controlled within a duration of a sub-period, thereby further ensuring real-time performance of data transmission.

In some embodiments, when determining the transmission timeslot of each user terminal device in each sub-period, the central office device may first determine a start sending time point of each user terminal device based on a distance between each user terminal device and the central office device, and further determine, based on the bandwidth requirement value of each user terminal device, the number of timeslots that each user terminal device needs to occupy, and further determine, with reference to the determined number of timeslots and the start sending time point, a specific timeslot occupied by each user terminal device in each sub-period. The process of computing transmission timeslots by the central office device is hereinafter described with reference to a specific example.

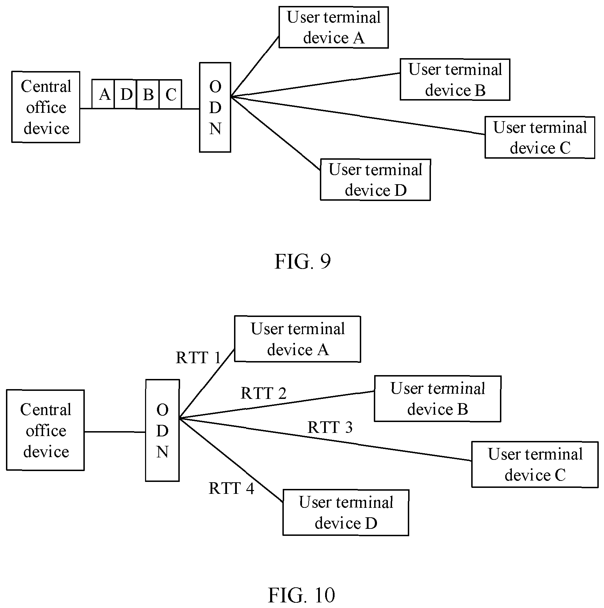

FIG. 8 is a schematic diagram of a scenario of data transmission according to an embodiment of this application. In FIG. 8, using four user terminal devices, user terminal device A to user terminal device D, as an example, each user terminal device transmits data to the central office device through the ODN. Lengths of connection lines in FIG. 8 represent distances from the user terminal devices to the ODN. It can be learned that user terminal device A is closest to the central office device, followed by user terminal device D, then user terminal device B, and the farthest is user terminal device C. The central office device may first determine a data transmission priority of each user terminal device based on the distance of each user terminal device. For example, in the scenario shown in FIG. 8, a priority order is: User terminal device A > User terminal device D > User terminal device B > User terminal device C. Therefore, each user terminal device can perform data transmission based on the priority order. FIG. 9 is a schematic diagram of a process of data transmission according to an embodiment of this application. In FIG. 9, data of user terminal device A is first sent to the central office device through the ODN, followed by data of user terminal device D, then data of user terminal device B, and finally data of user terminal device C.

Optionally, each user terminal device may transmit data based on a transmission order shown in FIG. 9, or based on a compensation time of each user terminal device calculated based on an optical path difference between adjacent user terminal devices, to further improve efficiency of data transmission. For example, continuing the foregoing examples in FIG. 8 and FIG. 9, in the data transmission process of user terminal device A, when a last sent packet has not yet arrived at the central office device, user terminal device D may start to send data, without waiting for all packets of user terminal device A to arrive at the central office device before starting to send. This period of early start is a compensation time of user terminal device D. Optionally, the compensation time may also be referred to as a sending offset time, and used to represent an advance time of the start sending time point of the user terminal device.

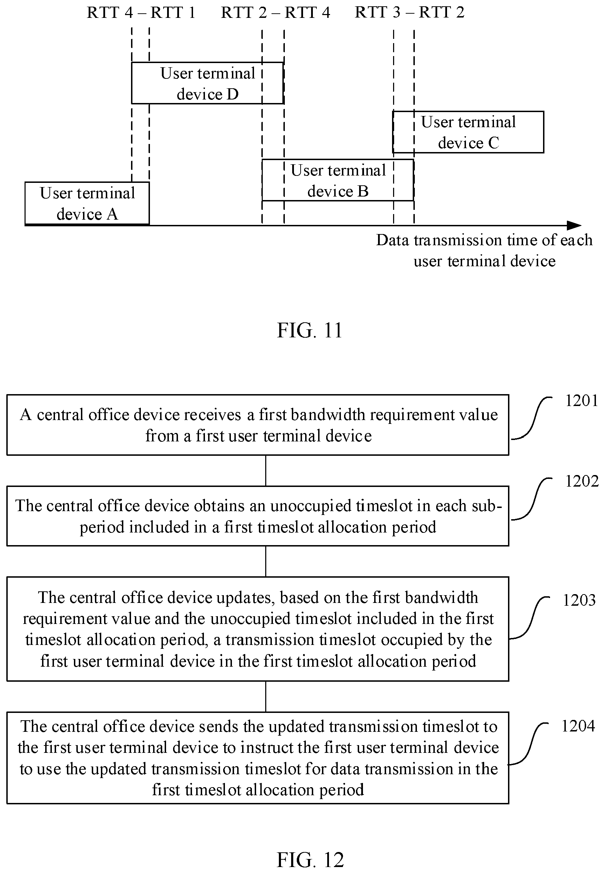

In an optional solution, when the compensation time of each user terminal device is determined, a time required for each user terminal device to send data to the central office device may be first determined based on a distance between each user terminal device and the central office device. For example, FIG. 10 is a schematic diagram of time consumption for data transmission by a user terminal device according to an embodiment of this application. In FIG. 10, a time required for user terminal device A to transmit data to the central office device is RTT 1, and a time required for user terminal device D to transmit data to the central office device is RTT 4. Therefore, the compensation time of user terminal device D is: (RTT 4 - RTT 1). Therefore, the central office device can determine the start sending time point of each user terminal device based on the determined transmission order and compensation time of each user terminal device, and determine the transmission timeslot of each user terminal device based on the start sending time point and the number of timeslots of each user terminal device. FIG. 11 is a schematic diagram of another process of data transmission by a user terminal device according to an embodiment of this application.

In some scenarios, when the user terminal device periodically reports the bandwidth requirement value to the central office device, the timeslot allocation period may be used as a reporting time interval. Alternatively, in some embodiments, the time interval for each user terminal device to report the bandwidth requirement value may also be dynamically adjusted. For example, the bandwidth requirement may be reported at intervals of a plurality of timeslot allocation periods when the bandwidth requirement does not change much, to reduce computing resources consumed by the central office device to compute an arrangement of timeslot allocation. The following still uses the first user terminal device among the plurality of user terminal devices as an example to describe a solution to dynamically adjusting the time interval for reporting the bandwidth requirement value proposed by this application.

In a possible case, when the bandwidth requirement value to be reported in the current timeslot allocation period is less than the bandwidth requirement value reported in the previous timeslot allocation period, the first user terminal device may report the bandwidth requirement value to the central office device before the current timeslot allocation period starts.

In another possible case, the bandwidth requirement value to be reported in the current timeslot allocation period is greater than the bandwidth requirement value reported in the previous timeslot allocation period, but a difference between the two is less than a preset value. This case represents that the bandwidth requirement of the first user terminal device has increased, but the change is small. Therefore, this application proposes that in this case, the first user terminal device should report the bandwidth requirement value to the central office device before the current timeslot allocation period starts.

In other words, if the first user terminal device determines that the bandwidth requirement value to be reported this time is the same as the bandwidth requirement value reported previous time, the bandwidth requirement value may not be reported this time.

In some embodiments, in a process of transmitting data in a timeslot allocation period (such as the first timeslot allocation period), when the first user terminal device determines that the currently occupied transmission timeslot cannot meet the data transmission requirement and that the difference between the allocated bandwidth and the required bandwidth is large, this embodiment of this application proposes that the first terminal device should directly send an emergency bandwidth allocation request to the central office device when it is determined that the bandwidth requirement sharply increases, where the emergency bandwidth allocation request carries a bandwidth requirement value of the first user terminal device when the bandwidth requirement sharply increases and an emergency identifier. After receiving the emergency bandwidth allocation request, the central office device may determine, based on the emergency identifier, that it is necessary to immediately allocate the required bandwidth to the first user terminal device, reallocate a transmission timeslot to the first user terminal device based on unallocated timeslots in the stored arrangement of timeslot allocation, and update and redeliver the arrangement. Based on the periodic timeslot allocation solution described in the foregoing embodiments, the following describes in detail the timeslot allocation solution provided in this application. FIG. 12 is a flowchart of a method for timeslot allocation in an optical access network according to this application. The method specifically includes the following steps.

1201. A central office device receives a first bandwidth requirement value from a first user terminal device.

The first bandwidth requirement value is sent by the first user terminal device when it is determined that an allocated bandwidth is less than a bandwidth required for data transmission and that a difference between the allocated bandwidth and the bandwidth required for data transmission is greater than a specified threshold.

Optionally, the first bandwidth requirement value may be carried in an emergency bandwidth request for transmission, and the emergency bandwidth request further includes an emergency identifier. For example, the emergency identifier may be a feature field carried in an emergency bandwidth request packet, and used to represent that a data transmission bandwidth requirement of the first user terminal device sharply increases and that an additional bandwidth is required. The first bandwidth requirement value is a bandwidth value required by the first user terminal device after the data transmission bandwidth requirement sharply increases. The first user terminal device is any one of a plurality of user terminal devices connected to the central office device through an ODN. A first timeslot allocation period may be any one of a plurality of preset timeslot allocation periods with equal durations.

As can be learned from the solutions described in the foregoing embodiments, in the first timeslot allocation period, each user terminal device may perform data transmission by using a transmission timeslot allocated by the central office device before the first timeslot allocation period starts. In this case, in the process of data transmission based on a transmission timeslot allocated by the central office device, when the first user terminal device determines that the difference between the occupied bandwidth and the bandwidth actually required for data transmission is greater than the specified threshold, the first user terminal device may send the first bandwidth requirement value to the central office device. For example, when an amount of data buffered in the first user terminal device reaches a threshold, the first bandwidth requirement value may be determined based on the amount of buffered data.

1202. The central office device obtains an unoccupied timeslot in each sub-period included in the first timeslot allocation period.

Optionally, if there is no unoccupied timeslot in each sub-period included in the first timeslot allocation period, or a bandwidth of an unoccupied timeslot included in the first timeslot allocation period cannot meet the first bandwidth requirement value, the central office device may further obtain unoccupied timeslots in a timeslot allocation period next to the first timeslot allocation period. For example, after determining an arrangement of timeslot allocation in each timeslot allocation period, the central office device may store the determined arrangement. An arrangement of any timeslot allocation period includes a transmission timeslot allocated to each user terminal device in the timeslot period and a remaining timeslot. Optionally, the central office device may mark an arrangement of timeslot allocation that has been fully used by the user terminal device as an expired arrangement, and then delete the expired arrangement. For example, after determining an arrangement of timeslot allocation period A, the central office device may store the arrangement of timeslot allocation period A, and after timeslot allocation period A ends, mark the arrangement of timeslot allocation period A as expired. Optionally, the central office device may further periodically delete the arrangement of timeslot allocation marked as expired in storage space.

Further, when obtaining the unoccupied timeslots included in the first timeslot allocation period, the central office device may first determine, from a plurality of stored unexpired arrangements, that there are unoccupied timeslots in an arrangement of the first timeslot allocation period, and determine that the first timeslot allocation period is closest to a current time point. Then the unoccupied timeslot in each sub-period may be obtained from the arrangement of the first timeslot allocation period.

1203. The central office device updates, based on the first bandwidth requirement value and the unoccupied timeslot included in the first timeslot allocation period, a transmission timeslot occupied by the first user terminal device in the first timeslot allocation period.

For example, the central office device may determine, based on a bandwidth requirement value reported by the first user terminal device previous time and the first bandwidth requirement value, the additional bandwidth required by the first user terminal device. Further, the central office device may determine an additional transmission timeslot that needs to be allocated to the first user terminal device from the unoccupied timeslots included in the first timeslot allocation period, thereby updating the transmission timeslot occupied by the first user terminal device in the first timeslot allocation period.

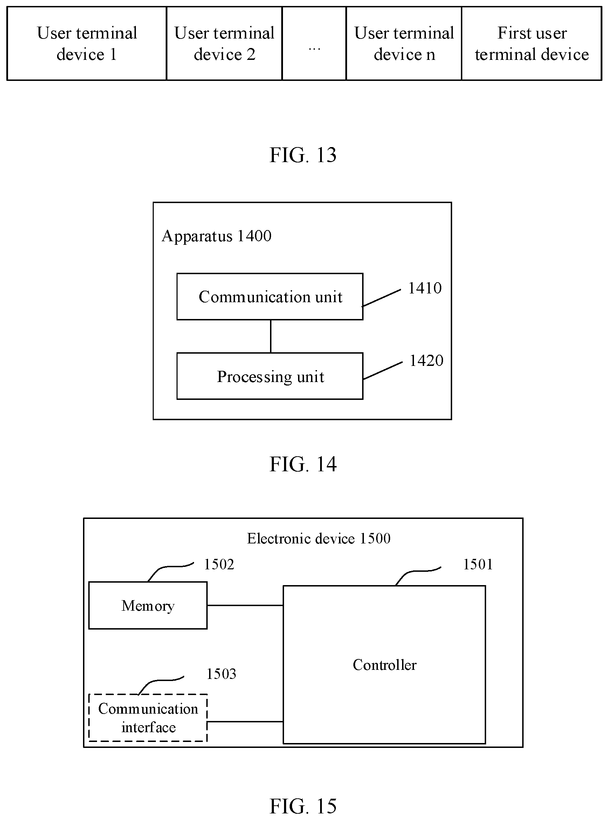

It should be noted that the central office device determines the additional transmission timeslot that needs to be allocated to the first user terminal device from the unoccupied timeslots included in the first timeslot allocation period, that is, determines the additional transmission timeslot that needs to be allocated to the first user terminal device from the unoccupied timeslot in each sub-period included in the first timeslot allocation period. For example, FIG. 13 is a schematic diagram of an updated sub-period.

1204. The central office device sends the updated transmission timeslot to the first user terminal device to instruct the first user terminal device to use the updated transmission timeslot for data transmission in the first timeslot allocation period.

For example, the updated transmission timeslot is used to indicate a transmission timeslot of the first user terminal device after the current time point. For example, using the timeslot allocation period shown in FIG. 6 as an example, if the first bandwidth requirement value is sent by the first user terminal device in sub-period M, it indicates that the first user terminal device uses the transmission timeslots before the update to transmit data in sub-period 1 to sub-period M, and that the updated transmission timeslots delivered by the central office device are used for the first user terminal device to transmit data in sub-period (M+1) to sub-period N.

Based on the foregoing solution, an embodiment of this application proposes that before a timeslot allocation period ends, if an amount of data transmitted by a user terminal device increases, an additional timeslot should be requested from the central office device. The central office device may determine, based on the request of the user terminal device, the additional timeslot to be allocated to the user terminal device from unallocated timeslots in the current timeslot allocation period, so that a transmission requirement of the user terminal device can be met in the current timeslot allocation period. Compared with a conventional solution in which a user terminal device needs to wait for a next timeslot allocation period to request more timeslots, the solution of this application can enable the transmission requirement of the user terminal device to be met in a timely manner, thereby reducing occurrence of buffer overflow of the user terminal device.

For example, when performing step 1203, the central office device may first obtain a second bandwidth requirement value sent by the first user terminal device before the first timeslot allocation period starts. The second bandwidth requirement value is used for the central office device to allocate a transmission timeslot to the first user terminal device in the first timeslot allocation period. Further, the central office device may determine, based on a difference between the first bandwidth requirement value and the second bandwidth requirement value, the additional bandwidth required by the first user terminal device. Therefore, the central office device can determine, based on the number of sub-periods included in the first timeslot allocation period, a part of an additional bandwidth that needs to be borne by each sub-period. Further, the central office device may allocate the additional transmission timeslot to the first user terminal device from the unoccupied timeslot in each sub-period based on bandwidth values corresponding to the timeslots included in each sub-period and the part of the bandwidth borne by each sub-period. The additional transmission timeslot and the transmission timeslot allocated by the central office device to the first user terminal before the first timeslot allocation period starts may constitute updated transmission timeslots of the first user terminal device.

Based on the same concept as the foregoing method, FIG. 14 is a schematic diagram of a structure of an apparatus 1400 for timeslot allocation according to an embodiment of this application. The apparatus 1400 is configured to implement the steps in the foregoing method. To avoid repetition, details are not described herein again. The apparatus 1400 includes a communication unit 1410 and a processing unit 1420.

In a possible scenario,
the communication unit 1410 is configured to receive a first bandwidth requirement value sent by a first user terminal device before a first timeslot allocation period ends, where the first bandwidth requirement value is sent by the first user terminal device when it is determined that an allocated bandwidth is less than a bandwidth required for data transmission and that a difference between the allocated bandwidth and the bandwidth required for data transmission is greater than a specified threshold;
the processing unit 1420 is configured to obtain an unoccupied timeslot in each sub-period included in the first timeslot allocation period;
the processing unit 1420 is further configured to update, based on the first bandwidth requirement value and the unoccupied timeslot, a transmission timeslot occupied by the first user terminal device in each sub-period; and
the communication unit 1410 is further configured to send the updated transmission timeslot to the first user terminal device.

In some embodiments, the processing unit 1420 is specifically configured to:
obtain a second bandwidth requirement value reported by the first user terminal device at a historical first time point, where the first time point is a time point before the first timeslot allocation period starts, the second bandwidth requirement value is used to determine a transmission timeslot occupied by the first user terminal device in each sub-period included in the first timeslot allocation period, the second bandwidth requirement value is less than the first bandwidth requirement value, and a difference between the first bandwidth requirement value and the second bandwidth requirement value is not less than the preset value;
allocate, based on the difference between the first bandwidth requirement value and the second bandwidth requirement value, an additional timeslot to the first user terminal device from the unoccupied timeslot included in each sub-period; and
update, based on the additional timeslot, the transmission timeslot occupied by the first user terminal device in each sub-period.

In some embodiments, before obtaining the second bandwidth requirement value, the processing unit 1420 is further configured to:
receive, through the communication unit 1410, a third bandwidth requirement value reported by the first user terminal device before a second timeslot allocation period starts, where the second timeslot allocation period is a timeslot allocation period previous to the first timeslot allocation period, where the second bandwidth requirement value is less than the third bandwidth requirement value and a difference between the second bandwidth requirement value and the third bandwidth requirement value is not less than a preset value, or the second bandwidth requirement value is greater than the third bandwidth requirement value and a difference between the second bandwidth requirement value and the third bandwidth requirement value is less than the preset value; and
determine, based on the third bandwidth requirement value, a transmission timeslot occupied by the first user terminal device in each sub-period included in the second timeslot allocation period.

In some embodiments, the processing unit 1420 is specifically configured to:
determine, based on the difference between the first bandwidth requirement value and the second bandwidth requirement value, an additional bandwidth required by the first user terminal device;
determine, with reference to a number of sub-periods included in the first timeslot allocation period and the additional bandwidth, a part of the bandwidth borne by each sub-period; and
allocate, based on the part of the bandwidth borne by each sub-period and a bandwidth corresponding to each of the unoccupied timeslots, the additional timeslot to the first user terminal device from the unoccupied timeslots.

In some embodiments, the processing unit 1420 is specifically configured to:
obtain stored arrangements of a plurality of timeslot allocation periods, where an arrangement of each timeslot allocation period includes a transmission timeslot allocated to each user terminal device in the timeslot allocation period;
delete an expired arrangement from the plurality of arrangements, and determine that there are unoccupied timeslots in an arrangement of the first timeslot allocation period among remaining arrangements and that an interval between an end time point of the first timeslot allocation period and a time point of receiving the emergency bandwidth request is the shortest, where the expired arrangement is an arrangement that has been fully used; and
obtain the unoccupied timeslot in each sub-period from the arrangement of the first timeslot allocation period.

In another possible scenario,
the processing unit 1420 is configured to instruct the communication unit 1410 to send a first bandwidth requirement value to a central office device when determining that an allocated bandwidth is less than a bandwidth required for data transmission and that a difference between the allocated bandwidth and the bandwidth required for data transmission is greater than a specified threshold during data transmission in a first timeslot allocation period; and
the communication unit 1410 is configured to receive an updated transmission timeslot sent by the central office device, where the updated transmission timeslot is determined by the central office device based on the first bandwidth requirement value and an unoccupied timeslot in each sub-period included in the first timeslot allocation period.

In some embodiments, before sending the first bandwidth requirement value, the communication unit 1410 is further configured to:
before the first timeslot allocation period starts, report a second bandwidth requirement value to the central office device, where the second bandwidth requirement value is less than the first bandwidth requirement value, and a difference between the first bandwidth requirement value and the second bandwidth requirement value is not less than the preset value; and
receive a transmission timeslot occupied by the first user terminal device in each sub-period included in the first timeslot allocation period, which is sent by the central office device.

In some embodiments, the processing unit 1420 is further configured to:
obtain a third bandwidth requirement value reported at a historical second time point, where the second time point is a time point before a second timeslot allocation period starts, and the second timeslot allocation period is a timeslot allocation period previous to the first timeslot allocation period; and
determine that the second bandwidth requirement value is less than the third bandwidth requirement value and that a difference between the second bandwidth requirement value and the third bandwidth requirement value is greater than the preset value; or
determine that the second bandwidth requirement value is greater than the third bandwidth requirement value and that a difference between the second bandwidth requirement value and the third bandwidth requirement value is less than the preset value.

FIG. 15 is a schematic diagram of a structure of an electronic device 1500 according to an embodiment of this application. The electronic device 1500 in this embodiment of this application may further include a communication interface 1503. The communication interface 1503 is, for example, a network port. The electronic device can transmit data through the communication interface 1503. For example, the communication interface 1503 can implement functions of the communication unit 1410 described in the foregoing embodiment.

In this embodiment of this application, the memory 1502 stores instructions that can be executed by the at least one controller 1501. The at least one controller 1501 may be configured to perform the steps in the foregoing method by executing the instructions stored in the memory 1502. For example, the controller 1501 can implement functions of the foregoing processing unit 1420 in FIG. 14.

The controller 1501, as a control center of the electronic device, can use various interfaces and lines to connect various parts of the entire electronic device, and run or execute the instructions stored in the memory 1502 and invoke data stored in the memory 1502. Optionally, the controller 1501 may include one or more processing units. An application controller and a modem controller may be integrated into the controller 1501. The application controller mainly processes an operating system, an application program, and the like. The modem controller mainly processes wireless communication. It may be understood that the modem controller may alternatively not be integrated in the controller 1501. In some embodiments, the controller 1501 and the memory 1502 may be implemented on a same chip. In some embodiments, the controller 1501 and the memory 1502 may also be implemented separately on separate chips.

The controller 1501 may be a general-purpose controller, for example, a central controller (English: Central Processing Unit, CPU for short), a digital signal processor, an application-specific integrated circuit, a field programmable gate array or another programmable logic device, a discrete gate or a transistor logic device, or a discrete hardware component, and may implement or perform the methods, steps, and logical block diagrams disclosed in the embodiments of this application. The general-purpose controller may be a microcontroller or any conventional controller or the like. The steps of adjusting the bandwidth of the data transmission channel in the data transmission process, disclosed with reference to the embodiments of this application, may be directly performed and completed by a hardware controller, or may be performed and completed by using a combination of hardware in the controller and a software module.

As a non-volatile computer-readable storage medium, the memory 1502 may be configured to store non-volatile software programs, non-volatile computer-executable programs, and modules. The memory 1502 may include at least one type of storage medium, for example, may include a flash memory, a hard disk, a multimedia card, a memory card, a random access memory (English: Random Access Memory, RAM for short), a static random access memory (English: Static Random Access Memory, SRAM for short), a programmable read-only memory (English: Programmable Read Only Memory, PROM for short), a read-only memory (English: Read Only Memory, ROM for short), an electrically erasable programmable read-only memory (English: Electrically Erasable Programmable Read-Only Memory, EEPROM for short), a magnetic memory, a magnetic disk, an optical disc, or the like. The memory 1502 is but not limited to any other medium that can be used to carry or store desired program code in a form of an instruction or a data structure and can be accessed by a computer. The memory 1502 in the embodiments of this application may alternatively be a circuit or any other apparatus that can implement a storage function, and is configured to store a program instruction and/or data.

Based on the design and programming of the controller 1501, for example, code corresponding to the method for timeslot allocation described in the foregoing embodiment can be embedded into the chip, so that the chip can perform the steps of the foregoing method during running. How to design and program the controller 1501 is a technology known to a person skilled in the art, and details are not described herein.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a controller of another programmable data processing device to generate a machine, so that the instructions executed by the computer or the controller of the other programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions may be loaded onto a computer or another programmable data processing device, so that a series of operations and steps are performed on the computer or the another programmable device, to generate computer-implemented processing. Therefore, the instructions executed on the computer or the other programmable device provide steps for implementing a specific function in one or more procedures in the flowcharts and/or in one or more blocks in the block diagrams.

Although preferred embodiments of this application have been described, a person skilled in the art can make additional changes and modifications to these embodiments once the person learns the basic inventive concept. Therefore, the appended claims shall be construed to cover the preferred embodiments and all changes and modifications falling within the scope of the embodiments of this application.

Apparently, a person skilled in the art may make various changes and variations to this application without departing from the spirit and scope of this application. Therefore, this application is intended to cover these modifications and variations of this application provided that they fall within the protection scope defined by the following claims and equivalent technologies thereof.

## Claims

1. A method for timeslot allocation in an optical access network, wherein the method is applied to a central office device, and the method comprises:
receiving a first bandwidth requirement value from a first user terminal device, wherein the first bandwidth requirement value is sent by the first user terminal device when it is determined that an allocated bandwidth is less than a bandwidth required for data transmission and that a difference between the allocated bandwidth and the bandwidth required for the data transmission is greater than a specified threshold, and the first bandwidth requirement value is used to represent a value of the bandwidth required for the data transmission;
obtaining an unoccupied timeslot in each sub-period comprised in a first timeslot allocation period, wherein the first timeslot allocation period is a current timeslot allocation period for the user terminal device to transmit data;
updating, based on the first bandwidth requirement value and the unoccupied timeslot, a transmission timeslot occupied by the first user terminal device in each sub-period; and
sending the updated transmission timeslot to the first user terminal device.

2. The method according to claim 1, wherein the updating, based on the first bandwidth requirement value and the unoccupied timeslot, the transmission timeslot occupied by the first user terminal device in each sub-period comprises:
obtaining a second bandwidth requirement value reported by the first user terminal device at a first time point, wherein the first time point is a time point before the first timeslot allocation period starts, the second bandwidth requirement value is used to determine a transmission timeslot occupied by the first user terminal device in each sub-period comprised in the first timeslot allocation period, the second bandwidth requirement value is less than the first bandwidth requirement value, and a difference between the first bandwidth requirement value and the second bandwidth requirement value is not less than the specified threshold;
allocating, based on the difference between the first bandwidth requirement value and the second bandwidth requirement value, an additional timeslot to the first user terminal device from the unoccupied timeslot comprised in each sub-period; and
updating, based on the additional timeslot, the transmission timeslot occupied by the first user terminal device in each sub-period.

3. The method according to claim 2, wherein before the obtaining the second bandwidth requirement value, the method further comprises:
receiving a third bandwidth requirement value reported by the first user terminal device before a second timeslot allocation period starts, wherein the second timeslot allocation period is a timeslot allocation period previous to the first timeslot allocation period, wherein the second bandwidth requirement value is less than the third bandwidth requirement value and a difference between the second bandwidth requirement value and the third bandwidth requirement value is greater than or equal to a preset value, or the second bandwidth requirement value is greater than the third bandwidth requirement value and a difference between the second bandwidth requirement value and the third bandwidth requirement value is less than the preset value; and
determining, based on the third bandwidth requirement value, a transmission timeslot occupied by the first user terminal device in each sub-period comprised in the second timeslot allocation period.

4. The method according to claim 2 or 3, wherein the allocating, based on the difference between the first bandwidth requirement value and the second bandwidth requirement value, the additional timeslot to the first user terminal device from the unoccupied timeslot comprised in each sub-period comprises:
determining, based on the difference between the first bandwidth requirement value and the second bandwidth requirement value, an additional bandwidth required by the first user terminal device;
determining, with reference to a number of sub-periods comprised in the first timeslot allocation period and the additional bandwidth, a part of the bandwidth borne by each sub-period; and
allocating, based on the part of the bandwidth borne by each sub-period and a bandwidth corresponding to each of the unoccupied timeslots, the additional timeslot to the first user terminal device from the unoccupied timeslots.

5. The method according to any one of claims 1 to 3, wherein the obtaining the unoccupied timeslot in each sub-period comprised in the first timeslot allocation period comprises:
obtaining stored arrangements of a plurality of timeslot allocation periods, wherein an arrangement of each timeslot allocation period comprises a transmission timeslot allocated to each user terminal device in the timeslot allocation period;
deleting an expired arrangement from the plurality of arrangements, and determining that there are unoccupied timeslots in an arrangement of the first timeslot allocation period among remaining arrangements and that an interval between an end time point of the first timeslot allocation period and a time point of receiving the first bandwidth requirement value is shorter than a preset interval, wherein the expired arrangement is an arrangement that has been fully used; and
obtaining the unoccupied timeslot in each sub-period from the arrangement of the first timeslot allocation period.

6. The method according to claim 5, wherein the interval between the end time point of the first timeslot allocation period and the time point of receiving the first bandwidth requirement value is the shortest.

7. The method according to claim 1, wherein a duration of each timeslot allocation period is fixed.

8. The method according to claim 1, wherein each sub-period comprises a transmission timeslot allocated to each user terminal device.

9. The method according to claim 8, wherein the transmission timeslot allocated to each user terminal device in each sub-period is determined in the following manner:
determining a start sending time point of each user terminal device based on a distance between each user terminal device and the central office device;
determining, based on a bandwidth requirement value of each user terminal device, a number of timeslots that each user terminal device needs to occupy; and
determining, based on the determined number of timeslots and the start sending time point, a specific timeslot occupied by each user terminal device in each sub-period.

10. The method according to claim 9, wherein the determining the start sending time point of each user terminal device based on the distance between each user terminal device and the central office device comprises:
determining a transmission order of each user terminal device based on the distance between each user terminal device and the central office device; and
determining the start sending time point of each user terminal device based on the transmission order and a compensation time.

11. The method according to claim 10, wherein the compensation time is determined in the following manner:
determining a compensation time of the first user terminal device based on a difference between a time required for the first user terminal device to transmit data to the central office device and a time required for a second user terminal device to transmit data to the central office device, wherein the second user terminal device is a user terminal device previous to the first user terminal device in transmitting data.

12. A method for timeslot allocation in an optical access network, wherein the method is applied to a first user terminal device, and the method comprises:
during data transmission in a first timeslot allocation period, when determining that an allocated bandwidth is less than a bandwidth required for the data transmission and that a difference between the allocated bandwidth and the bandwidth required for the data transmission is greater than a specified threshold, sending a first bandwidth requirement value to a central office device; and
receiving an updated transmission timeslot sent by the central office device, wherein the updated transmission timeslot is determined by the central office device based on the first bandwidth requirement value and an unoccupied timeslot in each sub-period comprised in the first timeslot allocation period.

13. The method according to claim 12, wherein before the sending the first bandwidth requirement value, the method further comprises:
before the first timeslot allocation period starts, reporting a second bandwidth requirement value to the central office device, wherein the second bandwidth requirement value is less than the first bandwidth requirement value, and a difference between the first bandwidth requirement value and the second bandwidth requirement value is not less than the preset value; and
receiving a transmission timeslot occupied by the first user terminal device in each sub-period comprised in the first timeslot allocation period, which is sent by the central office device, wherein the transmission timeslot is determined based on the second bandwidth requirement value.

14. The method according to claim 13, wherein before the sending the second bandwidth requirement value to the central office device, the method further comprises:
before a second timeslot allocation period starts, reporting a third bandwidth requirement value to the central office device, wherein the second timeslot allocation period is a timeslot allocation period previous to the first timeslot allocation period, wherein the second bandwidth requirement value is less than the third bandwidth requirement value and a difference between the second bandwidth requirement value and the third bandwidth requirement value is greater than or equal to a preset value, or the second bandwidth requirement value is greater than the third bandwidth requirement value and a difference between the second bandwidth requirement value and the third bandwidth requirement value is less than the preset value; and
receiving a transmission timeslot occupied by the first user terminal device in each sub-period comprised in the second timeslot allocation period, which is sent by the central office device, wherein the transmission timeslot is determined based on the third bandwidth requirement value.

15. An apparatus for timeslot allocation in an optical access network, wherein the apparatus is a central office device, or the apparatus is applied to the central office device, and the apparatus comprises:
a communication unit, configured to receive a first bandwidth requirement value from a first user terminal device, wherein the first bandwidth requirement value is sent by the first user terminal device when it is determined that an allocated bandwidth is less than a bandwidth required for data transmission and that a difference between the allocated bandwidth and the bandwidth required for the data transmission is greater than a specified threshold, and the first bandwidth requirement value is used to represent a value of the bandwidth required for the data transmission; and
a processing unit, configured to obtain an unoccupied timeslot in each sub-period comprised in the first timeslot allocation period, wherein the first timeslot allocation period is a current timeslot allocation period for the user terminal device to transmit data; and further configured to update, based on the first bandwidth requirement value and the unoccupied timeslot, a transmission timeslot occupied by the first user terminal device in each sub-period, wherein
the communication unit is configured to send the updated transmission timeslot to the first user terminal device.

16. An apparatus for timeslot allocation in an optical access network, wherein the apparatus is a first user terminal device, or the apparatus is applied to the first user terminal device, and the apparatus comprises:
a processing unit, configured to instruct a communication unit to send a first bandwidth requirement value to a central office device when determining that an allocated bandwidth is less than a bandwidth required for data transmission and that a difference between the allocated bandwidth and the bandwidth required for the data transmission is greater than a specified threshold during the data transmission in a first timeslot allocation period; and
the communication unit, configured to receive an updated transmission timeslot sent by the central office device, wherein the updated transmission timeslot is determined by the central office device based on the first bandwidth requirement value and an unoccupied timeslot in each sub-period comprised in the first timeslot allocation period.

17. A system for timeslot allocation in an optical access network, wherein the system comprises a central office device and a plurality of user terminal devices, wherein
a first user terminal device is configured to send a first bandwidth requirement value to the central office device when determining that an allocated bandwidth is less than a bandwidth required for data transmission and that a difference between the allocated bandwidth and the bandwidth required for the data transmission is greater than a specified threshold during the data transmission in a first timeslot allocation period, wherein the first user terminal device is any one of the plurality of user terminal devices;
the central office device is configured to receive the first bandwidth requirement value sent by the first user terminal device before the first timeslot allocation period ends, and obtain an unoccupied timeslot in each sub-period comprised in the first timeslot allocation period; and update, based on the first bandwidth requirement value and the unoccupied timeslot, a transmission timeslot occupied by the first user terminal device in each sub-period, and send the updated transmission timeslot to the first user terminal device; and
the first user terminal device is configured to receive the updated transmission timeslot sent by the central office device.

18. An electronic device, wherein the electronic device comprises a controller and a memory, wherein
the memory is configured to store a computer program or instructions; and
the controller is configured to execute the computer program or instructions in the memory so that the method according to any one of claims 1 to 11 or any one of claims 12 to 14 is performed.

19. A computer-readable storage medium, wherein the computer-readable storage medium stores computer-executable instructions, and when the computer-executable instructions are invoked by a computer, the computer is enabled to perform the method according to any one of claims 1 to 11 or any one of claims 12 to 14.
